# EUROPÄISCHE PATENTANMELDUNG

(11) **EP 2 146 149 A2**
(43) Veröffentlichungstag der Anmeldung: **20.01.2010**
(21) Anmeldenummer: 09005695.3
(22) Anmeldetag: 23.04.2009
(51) Int. Cl.: F24D 19/00

(54) **Energiesparklimaanbau**

(30) Priorität: 14.07.2008 DE 202008009444 U
(71) Anmelder: Lang, Uwe, 83334 Inzell (DE); Waldherr, Hans, 83278 Traunstein (DE)
(72) Erfinder: Lang, Uwe, 83334 Inzell (DE); Waldherr, Hans, 83278 Traunstein (DE)

(57) **Zusammenfassung**

Mit dem Energiesparklimaanbau kann der Temperaturunterschied vom Boden bis zur Decke mindestens halbiert, die Temperaturverteilung im Raum verbessert und die Vonauftemperatur reduziert werden.

Trotzdem wird die gleiche Wunschtemperatur im Raum erreicht, die Luftqualität wird verbessert, der Wärmebedarf wird gemindert und es wird ein angenehmes Raum-Klima und außerdem - optional - eine Filterung von Haus- bzw. Feinstaub (Pollen) erreicht.

Als Voraussetzung für den Einsatz des Energiesparklimaanbaues gilt, dass die vorhandenen Heizkörper dem aktuellen Montagestand (modeme Flachheizkörper) entsprechen.

## Beschreibung

### 1. Was ist der derzeitige Zustand

Die Konvektionswärme bzw. Abstrahlung ist abhängig von der Vorlauftemperatur der bestehenden Heizungsanlage. Die Wärme steigt im Bereich des Heizkörpers auf (warme Luft ist leichter als kalte Luft), der Temperaturunterschied zwischen Boden und Decke ist groß und die Wärmeverteilung im Raum ist schlecht.

### 2. Was ist das Ziel

Den Temperaturunterschied vom Boden bis zur Decke mindestens zu halbieren, die Temperatuverteilung im Raum zu verbessern und die Absenkung der Vorlauftemperatur zu erreichen. Trotzdem wird die gleiche Wunschtemperatur im Raum erreicht, die Luftqualität wird verbessert, der Wärmebedarf wird gemindert und es wird damit ein angenehmes Raum-Klima und außerdem - optional - eine Filterung von Hausstaub bzw. Feinstaub (Pollen) erreicht.

### 3. Wie wird es erreicht (Funktion)

Die Luft wird mit dem Energiesparklimaanbau unterhalb des Flachheizkörpers horizontal zur Rauminnenseite abgesaugt, um 90° umgeleitet und im Heizkörper verteilt. Die so erwärmte bzw. abgekühlte Luft wird vertikal nach oben in den Raum abgegeben.
Dabei ist der Heizkörper ist der Wärmetauscher und die Luft der Wärmeträger. Durch dieses System entsteht eine höhere Konvektion und dem Boden wird die Kaltluft entzogen und im Deckenbereich wird die Warmluft entzogen - es entsteht ein kontinuierlicher Luftaustausch im Raum.

### 4. Wie wird es erreicht (Technik)

Für den kostenbewussten Haus- bzw. Heizungsbauer bietet sich dieser Energiesparklimaanbau an, der je nach Größe des vorhandenen Flachheizkörpers mit entsprechendem Befestigungsmaterial an der Unterseite des Heizkörpers befestigt wird. Damit brauchen keine Heizkörper ausgetauscht werden, d.h. am vorhandenen Heizkörper muss nichts geändert werden!
Der Kostenaufwand sowohl bei der Montage als auch beim Material sind gering. Wichtig dabei ist aber, dass die vorhandenen Heizkörper dem **aktuellen Montagestand (moderne Flachheizkörper)** entsprechen. Nur im Heizungskeller muss die Verrohrung und die Steuerung so umgebaut werden, dass neben der Heizung zukünftig auch die Kühlung gewährleistet ist.
Wer seine konventionelle Heizung nur für den Heizbetrieb optimieren will, braucht diese Arbeiten aber nicht durchführen!

Der bisherige Heizkörper (5) dient dabei als Basis-Energieversorger für die Heizung und Kühlung. Der Nachrüstsatz bietet alle Funktionen: Wärme- bzw. Kühltauscher, Tropfwanne (4), Luftbefeuchtung (2), Luftansaugung und -verteilung und Lüftereinheit (1) mit optionalem (Pollen-)Filter (3).
Mittels der Befeuchtungseinheit (2), die oberhalb des Lüfters (1) angeordnet ist, kann besonders während der Heizperiode Wasser zur Luftbefeuchtung hinzugegeben werden.

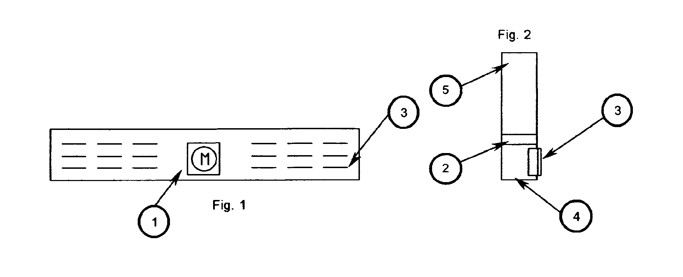

## Patentansprüche

1. Energiesparklimaanbau, **dadurch gekennzeichnet, dass** dieser über eine Akustik-Entkopplung zum bestehenden Heizkörper verfügt.

2. Energiesparklimaanbau, nach vorgenanntem Anspruch **dadurch gekennzeichnet, dass** dieser über ein horizontal liegendes Zuluftsystem verfügt.

3. Energiesparklimaanbau, nach vorgenannten Ansprüchen **dadurch gekennzeichnet, dass** dieser über die vorhandene Verrohrung mit dem bestehenden Heizungssystem gekoppelt ist.

4. Energiesparklimaanbau, nach vorgenannten Ansprüchen **dadurch gekennzeichnet, dass** dieser mit dem Thermostaten und in Abhängigkeit von der Vorlauftemperatur sowohl Heizen als auch Kühlen kann.

5. Energiesparklimaanbau, nach vorgenannten Ansprüchen **dadurch gekennzeichnet, dass** dieser den Raum zusätzlich klimatisieren (be- bzw. entfeuchten) kann.

6. Energiesparklimaanbau, nach vorgenannten Ansprüchen **dadurch gekennzeichnet, dass** dieser in erster Linie an ein Wärmepumpen- Heiz- und Kühlsystem angeschlossen wird.

7. Energiesparklimaanbau, nach vorgenannten Ansprüchen **dadurch gekennzeichnet, dass** dieser auch an ein konventionelles Heizsystem angeschlossen werden kann.

8. Energiesparklimaanbau, nach vorgenannten Ansprüchen **dadurch gekennzeichnet, dass** dieser bei Bedarf mit einem (Pollen-)Filter ausgerüstet werden kann, um zusätzliche Belastungen z.B. für Allergiker zu reduzieren.

9. Energiesparklimaanbau, nach vorgenannten Ansprüchen **dadurch gekennzeichnet, dass** durch die zusätzliche Belüftung durch den Heizkörper die Wärmeübertragung in den Raum optimiert wird.
